# EUROPEAN PATENT APPLICATION

(11) **EP 4 525 090 A1**
(43) Date of publication of application: **19.03.2025**
(21) Application number: 22962460.6
(22) Date of filing: 21.10.2022
(51) Int. Cl.: H01M 4/62, H01M 4/13

(54) **NEGATIVE ELECTRODE PLATE, SECONDARY BATTERY AND ELECTRIC DEVICE**

(71) Applicant: Contemporary Amperex Technology (Hong Kong) Limited, Central, Central And Western District (HK)
(72) Inventor: CHEN, Xuefang, Ningde City, Fujian 352100 (CN); YAO, Bin, Ningde City, Fujian 352100 (CN); LIU, Jiang, Ningde City, Fujian 352100 (CN)
(74) Representative: Kraus & Lederer PartGmbB
(86) International application number: PCT/CN2022/126763
(87) International publication number: WO 2024/082277

(57) **Abstract**

The present application provides a negative electrode plate, a secondary battery, and an electrical apparatus. The negative electrode plate comprises a negative electrode current collector and a negative electrode film layer arranged on at least one surface of the negative electrode current collector. The negative electrode film layer comprises a negative electrode active material and a polymer blend, and the polymer blend comprises a π-conjugated polymer and a polymer containing ester groups. In the present application, the dynamic performance of the secondary battery is improved by adding the polymer blend to the negative electrode film layer, thereby improving the charge-discharge rate performance and cycling stability of the secondary battery.

## Description

### Technical Field

The present application relates to the technical field of batteries, and in particular to a negative electrode plate, a secondary battery, and an electrical apparatus.

### Background Art

Secondary batteries feature high capacity and long service life, and are thus widely used in electronic devices such as mobile phones, laptops, battery vehicles, electric vehicles, electric planes, electric ships, electric toy cars, electric toy ships, electric toy planes and electric tools.

With the increasingly extensive application of batteries, the requirements for the performance of secondary batteries are becoming increasingly stringent. In order to improve the performance of the secondary battery, the negative electrode plate in the secondary battery is usually optimized and improved. However, currently, when the negative electrode plate is applied to a secondary battery, its charge-discharge rate performance and cycling performance are poor.

### Summary of the Invention

The present application is made in view of the above problems, and its purpose is to provide a negative electrode plate, a secondary battery, and an electrical apparatus.

A first aspect of the present application provides a negative electrode plate, the negative electrode plate comprises a negative electrode current collector and a negative electrode film layer arranged on at least one side of the negative electrode current collector, the negative electrode film layer comprises a negative electrode active material and a polymer blend, and the polymer blend comprises a π-conjugated polymer and a polymer containing ester groups.

Thus, the π-conjugated polymer of the present application has a structure with alternating single and double bonds. This structural form can form a delocalization effect, which is conducive to synergistically exerting ionic conductivity and electronic conductivity with the polymer containing ester groups, and can provide a solid-phase transmission channel for the diffusion and migration of active ions during the charging and discharging process of the secondary battery to effectively conduct ions, thereby improving the dynamic performance of the secondary battery, and improving the charge-discharge rate performance and cycling stability of the secondary battery.

In some embodiments, the π-conjugated polymer comprises one or more of substituted or unsubstituted polyaniline, substituted or unsubstituted polythiophene, substituted or unsubstituted polypyrrole, substituted or unsubstituted polyacetylene, substituted or unsubstituted poly(p)phenylene (ethylene), substituted or unsubstituted poly(p)phenylene acetylene, substituted or unsubstituted polyfluorene, substituted or unsubstituted polyselenophene, substituted or unsubstituted polycarbazole and substituted or unsubstituted polydiyne.

In some embodiments, the polymer containing ester groups comprises one or more of substituted or unsubstituted poly(meth)acrylic acid and salts thereof, substituted or unsubstituted polymaleic acid and salts thereof, substituted or unsubstituted polyfumaric acid and salts thereof, substituted or unsubstituted sodium alginate and substituted or unsubstituted carboxymethyl cellulose salts.

In some embodiments, poly(meth)acrylic acid and salts thereof comprise one or more of poly(meth)acrylic acid, lithium poly(meth)acrylate, sodium poly(meth)acrylate, and potassium poly(meth)acrylate.

In some embodiments, polymaleic acid and salts thereof comprise one or more of polymaleic acid, lithium polymaleate, sodium polymaleate, and potassium polymaleate.

In some embodiments, polyfumaric and salts thereof comprise one or more of polyfumaric acid, lithium polyfumarate, sodium polyfumarate and potassium polyfumarate.

In some embodiments, the carboxymethyl cellulose salt comprises one or more of lithium carboxymethyl cellulose, sodium carboxymethyl cellulose, and potassium carboxymethyl cellulose.

In some embodiments, the mass content of the polymer containing ester groups relative to the negative electrode film layer is recorded as A%; the mass content of the π-conjugated polymer relative to the negative electrode film layer is recorded as B%; and the negative electrode plate satisfies: 0.1≤A/B≤6; optionally, 0.3≤A/B≤3. When the secondary battery satisfies the above relationship, the ion conductivity and electron conductivity of the polymer blend can be further exhibited.

In some embodiments, the mass content of the polymer containing ester groups relative to the negative electrode film layer is recorded as A%, 0.5≤A≤3; and/or the mass content of the π-conjugated polymer relative to the negative electrode film layer is recorded as B%, 0.5≤B≤3.

Therefore, in the present application, the mass content of the polymer containing ester groups is regulated and controlled within a certain range, which can ensure the structural stability and uniform performance of the negative electrode plate, and is conducive to improving the cycling stability and charge-discharge rate performance of the secondary battery. In the present application, the mass content of the π-conjugated polymer is regulated and controlled within a certain range, which can ensure its contribution to the conductivity of the negative electrode film layer while ensuring the smooth migration of active ions during the charging and discharging process, thereby improving the charge-discharge rate performance of the secondary battery.

In some embodiments, the negative electrode film layer further comprises a negative electrode binder having a mass content of D%, 0≤D≤2, and optionally, 0≤D≤1.5, relative to the total mass of the negative electrode film layer; optionally, the negative electrode binder comprises one or more of styrene butadiene rubber, polyacrylic acid, sodium polyacrylate, polyacrylamide, polyvinyl alcohol, sodium alginate, polymethacrylic acid, and carboxymethyl chitosan; and further optionally, the negative electrode binder comprises styrene butadiene rubber and/or polyacrylamide. Therefore, the present application regulates and controls 0≤D≤1.5, which can improve both the structural stability and conductivity of the negative electrode plate.

In some embodiments, the negative electrode film layer further comprises a negative electrode conductive agent, and the mass content of the negative electrode conductive agent relative to the total mass of the negative electrode film layer is recorded as F%, 0≤F≤1; optionally, 0≤F≤0.5; optionally, the negative electrode conductive agent comprises one or more of superconducting carbon, acetylene black, carbon black, Ketjen black, carbon dots, carbon nanotubes, graphene and carbon nanofibers; further optionally, the negative electrode conductive agent comprises superconducting carbon and/or carbon nanotubes. The present application regulates and controls 0≤F≤0.5, which can better improve the conductivity of the two negative electrode film layers and improve the fast charging performance of the secondary battery.

In some embodiments, the negative electrode film layer further comprises a negative electrode dispersant, and the mass content of the negative electrode dispersant relative to the total mass of the negative electrode film layer is recorded as E%, 0≤E≤1.5; optionally, 0≤E≤1; optionally, the negative electrode dispersant comprises one or more of sodium carboxymethyl cellulose, sodium methylene dimethyl dinaphthalene sulfonate, sodium dodecylbenzenesulfonate, polyethyleneimine and N-methylpyrrolidone. The present application regulates and controls 0≤E≤1, which can improve both the structural stability and the uniformity of the overall performance of the negative electrode film layer.

In some embodiments, the percentage mass content of the negative electrode active material relative to the total mass of the negative electrode film layer is recorded as C%, 90≤C≤95; optionally, 96≤C≤99; optionally, the negative electrode active material comprises one or more of artificial graphite, natural graphite, soft carbon, hard carbon, silicon-based material, tin-based material and lithium titanate. The polymer blend can provide ionic conductivity and electronic conductivity for the negative electrode film layer on one hand, and provide moderate bonding performance for the negative electrode film layer on the other hand; therefore, the use of the polymer blend can reduce the content of other auxiliary agents such as a conductive agent and a binder in the negative electrode film layer, so that the mass content of the negative electrode active material in the negative electrode film layer can be relatively increased, thereby improving the gram capacity of the negative electrode film layer and improving the cycling performance of the secondary battery.

A second aspect of the present application further provides a secondary battery comprising the negative electrode plate according to any embodiment of the first aspect of the present application.

A third aspect of the present application further provides an electrical apparatus comprising the secondary battery according to the second aspect of the present application.

### Description of Drawings

In order to illustrate the technical solutions of the embodiments of the present application more clearly, the following briefly introduces the drawings required in the embodiments of the present application. Obviously, the drawings described below are only some examples of the present application. For those of ordinary skill in the art, other drawings can also be obtained according to the drawings without any creative effort.
Fig. 1 is a schematic diagram of an embodiment of a negative electrode plate according to the present application.
Fig. 2 is a schematic sectional view of the negative electrode plate shown in Fig. 1 taken along the line A-A;
Fig. 3 is a schematic diagram of an embodiment of an electrode assembly of a secondary battery according to the present application.
Fig. 4 is a schematic diagram of an embodiment of a secondary battery according to the present application.
Fig. 5 is a schematic exploded view of an embodiment of the secondary battery in Fig. 4.
Fig. 6 is a schematic diagram of an embodiment of a battery module according to the present application.
Fig. 7 is a schematic diagram of an embodiment of a battery pack according to the present application.
Fig. 8 is a schematic exploded view of an embodiment of the battery pack shown in Fig. 7.
Fig. 9 is a schematic diagram of an embodiment of an electrical apparatus comprising a secondary battery according to the present application as a power source.

The accompanying drawings are not necessarily drawn to actual scale.

### Description of reference numerals:

1. battery pack; 2. upper box; 3. lower box; 4. battery module;
5. secondary battery; 51. case; 52. electrode assembly;
521. negative electrode plate; 5211. negative electrode current collector; 5212. negative electrode film layer;
522. positive electrode plate; 523. separator;
53. cover plate
6. electrical apparatus.

### Detailed Description

Hereinafter, embodiments that specifically disclose a negative electrode plate, a secondary battery, and an electrical apparatus of the present application will be described in detail. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless otherwise stated, the numerical range "a-b" is the abbreviated representation of any real number combination between a and b, where both a and b are real numbers. For example, the numerical range "0-5" indicates that all real numbers between "0-5" are listed herein, and "0-5" is only an abbreviated representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, the method comprises steps (a) and (b), indicating that the method may comprise steps (a) and (b) performed sequentially, or may comprise steps (b) and (a) performed sequentially. For example, when it is mentioned that the method can also comprise step (c), it means that step (c) can be added to the method in any order. For example, the method can comprise steps (a), (b), and (c), or steps (a), (c), and (b), or steps (c), (a), and (b).

Unless otherwise specifically stated, the "comprising" and "comprising" mentioned in the present application mean open-ended, or may be closed-ended. For example, "comprising" and "comprising" may indicate that it is possible to comprise or comprise other components not listed, and it is also possible to comprise or comprise only the listed components.

If not specifically stated, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

In the present application, the terms "multiple" and "a plurality of" refer to two or more.

### Negative electrode plate

In a first aspect, the present application proposes a negative electrode plate.

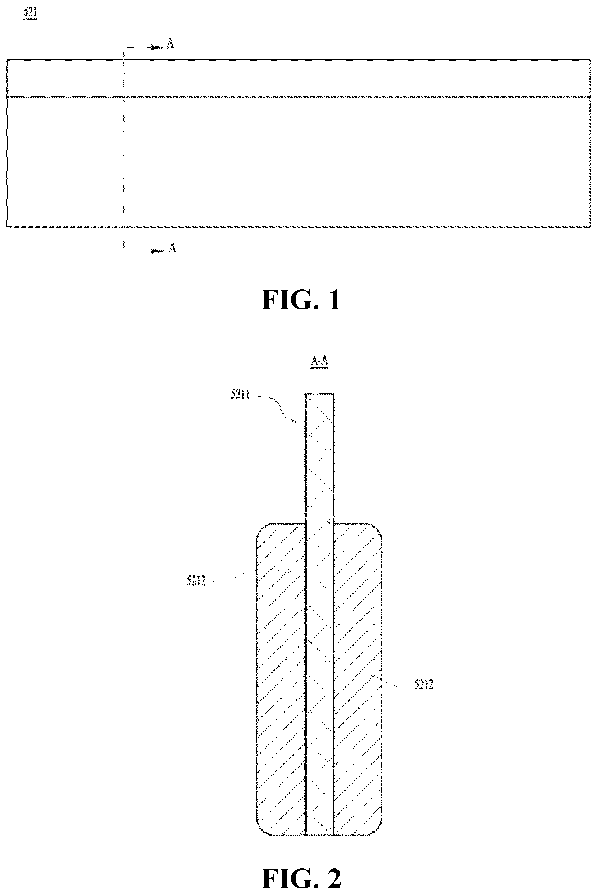

As shown in Figs. 1 and 2, the negative electrode plate 521 comprises a negative electrode current collector 5211 and a negative electrode film layer 5212 disposed on at least one side of the negative electrode current collector 5211, the negative electrode film layer 5212 comprises a negative electrode active material and a polymer blend, and the polymer blend comprises a π-conjugated polymer and a polymer containing ester groups.

As an example, the negative electrode current collector 5211 has two opposite sides in its own thickness direction, and the negative electrode film layer 5212 is provided on either one or both of the two opposite sides of the negative electrode current collector 5211.

The inventors have found through a large number of experiments that by adding the polymer blend formed by the π-conjugated polymer and the polymer containing ester groups to the negative electrode plate 521, the secondary battery can have improved dynamic performance, good charge-discharge rate performance and long-term cycling stability.

During the charging process of the secondary battery, the following electrochemical processes are usually required for the negative electrode plate 521: (1) the active ions (such as lithium ions, sodium ions) detached from the positive electrode active material enter the electrolyte solution, and along with the electrolyte solution, enter the inside of the pores of the negative electrode film layer 5212 to achieve the liquid phase conduction of the active ions inside the pores; (2) the active ions and electrons complete the charge exchange on the surface of the negative electrode active material; (3) the active ions are conducted from the surface of the negative electrode active material to the interior of the negative electrode active material crystal in solid phase.

The polymer blend refers to the polymer formed by blending the π-conjugated polymer and the polymer containing ester groups. The so-called blend can be formed by mixing a π-conjugated homopolymer and a homopolymer containing ester groups; it can also refer to the polymer system formed by polymerizing monomers of π-conjugated polymers and monomers of polymers containing ester groups in the same system.

The π-conjugated polymer is a π-conjugated system with alternating single and double bonds. Due to the existence of energy level difference in the molecular orbital of the conjugated π bond, π electrons cannot move freely on the molecular chain. The π-conjugated polymer is conductive only in the doped state. This doping refers to a process in which electrons are introduced into the empty orbitals in the molecular chain of the π-conjugated polymer, and it is also a process in which the energy level of the original electronic energy band changes. Because the energy level difference between the energy bands in the above process is reduced, the resistance during carrier migration is reduced, and the mobility of carriers is improved, which in turn makes the π-conjugated polymer have electronic conductivity, or improved conductivity. Taking polyaniline as an example, the main chain of the π-conjugated polymer is reduced so that its main chain has a negative charge, and in order to maintain electrical neutrality, cations such as lithium ions will bind to the main chain to make the π-conjugated polymer conductive. The π-conjugated polymer, as a component of the negative electrode film layer 5212, can improve the conductivity of the negative electrode film layer 5212. Optionally, the π-conjugated polymer comprises one or more of substituted or unsubstituted polyaniline, substituted or unsubstituted polythiophene, substituted or unsubstituted polypyrrole, substituted or unsubstituted polyacetylene, substituted or unsubstituted poly(p)phenylene (ethylene), substituted or unsubstituted poly(p)phenylene acetylene, substituted or unsubstituted polyfluorene, substituted or unsubstituted polyselenophene, substituted or unsubstituted polycarbazole and substituted or unsubstituted polydiyne; when substituted, the substituents may be halogen atoms such as fluorine atoms, and bromine atoms; the substituents can also be other functional groups such as hydroxyl groups. Further optionally, the π-conjugated polymer comprises polyaniline and/or polythiophene.

The ester groups in the polymer containing ester groups are evolved from carboxyl groups, where the hydrogen atoms in the carboxyl groups are substituted by metal ions, hydrogen bonds can be formed between the carboxyl groups, and its own bonding performance is improved. The carboxyl groups can bind to the hydroxyl groups on the surface of the negative electrode active material to form ester bonds, so that the binding force between the polymer containing ester groups and the negative electrode active material is improved, and the negative electrode active material is not easy to fall off from the negative electrode current collector 5211, that is, the negative electrode plate 521 is not prone to powder shedding and other phenomena, which can improve the structural stability of the negative electrode plate 521 and the cycling stability of the secondary battery using the negative electrode plate 521. Optionally, the polymer containing ester groups comprises one or more of substituted or unsubstituted poly(meth)acrylic acid and salts thereof, substituted or unsubstituted polymaleic acid and salts thereof, substituted or unsubstituted polyfumaric acid and salts thereof, substituted or unsubstituted sodium alginate and substituted or unsubstituted carboxymethyl cellulose salts. When substituted, the substituents may be halogen atoms such as fluorine atoms, bromine atoms; the substituents may also be other functional groups such as hydroxyl groups. Optionally, the poly(meth)acrylic acid and salts thereof comprise one or more of poly(meth)acrylic acid, lithium poly(meth)acrylate, sodium poly(meth)acrylate, and potassium poly(meth)acrylate. The polymaleic acid and salts thereof comprise one or more of polymaleic acid, lithium polymaleate, sodium polymaleate, and potassium polymaleate. The polyfumaric acid and salts thereof comprise one or more of polyfumaric acid, lithium polyfumarate, sodium polyfumarate and potassium polyfumarate. The carboxymethyl cellulose salt comprises one or more of lithium carboxymethyl cellulose, sodium carboxymethyl cellulose, and potassium carboxymethyl cellulose. Further optionally, the polymer containing ester groups comprises lithium polyacrylate and/or lithium polymethacrylate.

The above analysis is only based on the impact of each parameter on the secondary battery when it exists alone, but when the π-conjugated polymer and the polymer containing ester groups are applied to the negative electrode film layer 5212, the two are interrelated and inseparable. The π-conjugated polymer has a structure with alternating single and double bonds. This structural form can form a delocalization effect, which is conducive to synergistically exerting ionic conductivity and electronic conductivity together with the polymer containing ester groups, and can provide a solid-phase transmission channel for the diffusion and migration of active ions during the charging and discharging process of the secondary battery to effectively conduct ions, thereby improving the dynamic performance of the secondary battery, and improving the charge-discharge rate performance and cycling stability of the secondary battery.

After in-depth research by the inventors, it is found that when the secondary battery satisfies the following relational expression 0.1≤A/B≤6, the ionic conductivity and electronic conductivity of the polymer blend can be further developed.

In the above relational expression, A% represents the mass content of the polymer containing ester groups relative to the total mass of the negative electrode film layer 5212. If the mass content of the polymer containing ester groups is too small, it is not conducive to its bonding performance, and the negative electrode plate 521 may have powder shedding, and the overall ion conductivity of the negative electrode plate 521 is poor. Since the polymer containing ester groups has relatively good bonding performance, as its content in the negative electrode film layer 5212 increases, the bonding performance will be improved; however, the excessive improvement of the bonding performance may cause agglomeration between particles such as negative electrode active materials, making the substances in the negative electrode film layer 5212 dispersed unevenly, affecting the overall performance of the negative electrode film layer 5212. Therefore, the present application regulates and controls the mass content of the polymer containing ester groups within a certain range, and in this way, the structural stability and performance uniformity of the negative electrode plate 521 can be ensured, which helps to improve the cycling stability and charge-discharge rate performance of the secondary battery. Optionally, 0.5≤A≤3.

In the above relational expression, B% represents the mass content of the π-conjugated polymer relative to the total mass of the negative electrode film layer 5212. If the mass content of the π-conjugated polymer is too small, it is not conducive to its conductivity. As the content of the π-conjugated polymer increases, the conductivity it contributes to the negative electrode film layer 5212 increases; however, because the π-conjugated polymer cannot provide sites for the intercalation of active ions, the excess π-conjugated polymer will occupy the space of the negative electrode active material, which is not conducive to the intercalation of active ions. Therefore, the present application regulates and controls the mass content of the π-conjugated polymer within a certain range, which can ensure contribution to the conductivity of the negative electrode film layer 5212 while ensuring the smooth migration of active ions in the charging and discharging process, thereby improving the charge-discharge rate performance of the secondary battery. Optionally, 0.5≤B≤3.

After the above analysis, it can be seen that when the π-conjugated polymer and the polymer containing ester groups exist independently, they can each play their own role; but when the mass contents of the two satisfy 0.1≤A/B≤6, the ionic conductivity and electronic conductivity of the polymer blend can be further developed. Optionally, 0.3≤A/B≤3.

When the inventors improved the composition of the negative electrode plate 521, further research found that when the composition of the negative electrode film layer 5212 of the negative electrode plate 521 satisfies one or more of the following conditions, the performance of the negative electrode plate 521 as well as the performance of the secondary battery using the negative electrode plate 521 can be further improved.

In some embodiments, the negative electrode film layer 5212 comprises a negative electrode active material, and the percentage mass content of the negative electrode active material relative to the total mass of the negative electrode film layer 5212 is recorded as C%, 90≤C≤95.

The polymer blend can provide ionic conductivity and electronic conductivity for the negative electrode film layer 5212 on one hand, and provide moderate bonding performance for the negative electrode film layer 5212 on the other hand; therefore, the use of the polymer blend can reduce the content of other auxiliary agents such as a conductive agent and a binder in the negative electrode film layer 5212, so that the mass content of the negative electrode active material in the negative electrode film layer 5212 can be relatively increased, thereby improving the gram capacity of the negative electrode film layer 5212 and improving the cycling performance of the secondary battery. Optionally, 96≤C≤99.

In some embodiments, a negative electrode active material for the battery well known in the art can be used as the negative electrode active material. As an example, the negative electrode active material may comprise at least one of the following materials: artificial graphite, natural graphite, soft carbon, hard carbon, silicon-based material, tin-based material, and lithium titanate, etc. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer 5212 may further optionally comprise a negative electrode binder, and the mass content of the negative electrode binder relative to the total mass of the negative electrode film layer 5212 is recorded as D%, 0≤D≤ 2.

In view of the good bonding performance of the polymer blend, there is no need to add an additional negative electrode binder in the system; of course, a negative electrode binder can also be added in the negative electrode film layer 5212, and the additional addition of the negative electrode binder can further improve the bonding performance of the system, increase the binding force between the negative electrode film layer 5212 and the negative electrode current collector 5211, improve the structural stability of the negative electrode plate 521, and improve the cycling stability of the secondary battery. However, since the negative electrode binder is usually an insulating material, too much negative electrode binder is not conducive to the conductivity of the negative electrode film layer 5212; therefore, the present application regulates and controls 0≤D≤1.5, which can improve both the structural stability and the conductivity of the negative electrode plate 521. D=0 indicates that the negative electrode binder may not be added to the negative electrode film layer 5212; D>0 indicates that the negative electrode binder is added to the negative electrode film layer 5212. The negative electrode binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). Optionally, the negative electrode binder may be selected from styrene butadiene rubber (SBR) and/or polyacrylamide (PAM).

In some embodiments, the negative electrode film layer 5212 may further optionally comprise a negative electrode conductive agent, and the mass content of the negative electrode conductive agent relative to the total mass of the negative electrode film layer 5212 is recorded as F%, 0≤F≤ 1.

In view of the ionic conductivity and electronic conductivity of the polymer blend, there is no need to add an additional negative electrode conductive agent to the system; of course, a negative electrode conductive agent can also be added to the negative electrode film layer 5212, and the additional addition of the negative electrode conductive agent can further improve the conductivity of the negative electrode film layer 5212 and improve the fast charging performance of the secondary battery. However, as the amount of the negative electrode conductive agent used increases, its disadvantages become more and more obvious, as the negative electrode conductive agent may have problems such as small particle size, large specific surface area, and poor dispersibility, making the dispersion of the system not uniform. Therefore, the present application regulates and controls 0≤F≤0.5, which can better improve the conductivity of the two negative electrode film layers 5212 and improve the fast charging performance of the secondary battery. F=0 indicates that the negative electrode conductive agent may not be added to the negative electrode film layer 5212; F>0 indicates that the negative electrode conductive agent is added to the negative electrode film layer 5212. The negative electrode conductive agent may be selected from at least one of superconducting carbon, acetylene black, carbon black, Ketjen black, carbon dots, carbon nanotubes, graphene, and carbon nanofibers. Optionally, the negative electrode conductive agent may comprise superconducting carbon and/or carbon nanotubes.

**In** some embodiments, the negative electrode film layer 5212 may further optionally comprise other auxiliary agents, such as one or more of negative electrode dispersants (such as sodium carboxymethyl cellulose (CMC-Na)), sodium methylene dimethyl dinaphthalene sulfonate, sodium dodecylbenzenesulfonate, polyethyleneimine, and N-methylpyrrolidone. The mass content of the negative electrode dispersant relative to the total mass of the negative electrode film layer 5212 is recorded as E%, 0≤E≤1.5.

**In** view of the good bonding performance of the polymer blend, the particles in the system can be bonded to the negative electrode current collector 5211, and the particles can be bonded with each other; while the polymer blend has bonding performance, its bonding performance is not excessive, so that it also has a certain dispersibility, and the particles in the system are uniformly dispersed, so there is no need to add an additional negative electrode dispersant to the system. Of course, an additional negative electrode dispersant can also be added to the system to further improve the dispersitivity of the particles and reduce the risk of agglomeration between particles, making the overall performance of the negative electrode film layer 5212 uniform. However, with the increase in the amount of the negative electrode dispersant used, defects in its own structure can significantly affect the performance of the negative electrode film layer 5212. For example, the mechanical performance of the negative electrode dispersant may be poor, leading to poor overall mechanical performance and unstable structure of the negative electrode film layer 5212. Therefore, the present application regulates and controls 0≤E≤1, which can improve both the structural stability and the uniformity of the overall performance of the negative electrode film layer 5212. E=0 indicates that the negative electrode dispersant may not be added to the negative electrode film layer 5212; E>0 indicates that the negative electrode dispersant is added to the negative electrode film layer 5212.

In some embodiments, the negative electrode current collector 5211 can be a metal foil or a composite current collector. For example, a copper foil can be used as the metal foil. The composite current collector may comprise a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the negative electrode plate 521 can be prepared by dispersing the components for preparing the negative electrode plate 521, for example, the negative electrode active material and any other components in a solvent (for example, deionized water) to form a negative electrode slurry; and coating the negative electrode slurry on a negative electrode current collector 5211, followed by oven drying, cold pressing and other procedures, to obtain the negative electrode plate 521.

### Secondary battery

In a second aspect, the present application proposes a secondary battery.

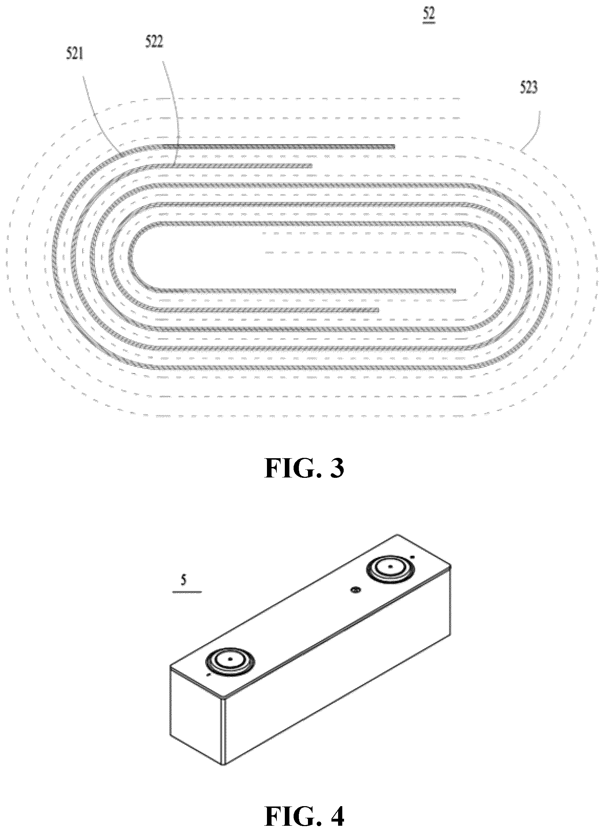

As shown in Figs. 3 and 4, the secondary battery 5 comprises a positive electrode plate 522, a negative electrode plate 521, an electrolyte and a separator 523. During the charging and discharging process of the battery, active ions are intercalated and deintercalated back and forth between the positive electrode plate 522 and the negative electrode plate 521. The electrolyte serves to conduct ions between the positive electrode plate 522 and the negative electrode plate 521. The separator 523 is provided between the positive electrode plate 522 and the negative electrode plate 521, and mainly serves to prevent a short circuit between the positive electrode and the negative electrode while allowing ions to pass through. The negative electrode plate 521 may be the negative electrode plate 521 of any embodiment of the first aspect of the present application.

### [Positive electrode plate]

In some embodiments, the positive electrode plate 522 comprises a positive electrode current collector and a positive electrode film layer provided on at least one surface of the positive electrode current collector. For example, the positive electrode current collector has two opposite surfaces in the direction of its own thickness, and the positive electrode film layer is arranged on either or both of the two opposite surfaces of the positive electrode current collector.

The positive active film layer comprises a positive electrode active material, and the positive electrode active material may be a positive electrode active material for secondary batteries known in the art. As an example, the positive electrode active material may comprise at least one of the following materials: a layered positive electrode active material (such as ternary, lithium/sodium nickelate, lithium/sodium cobaltate, lithium/sodium manganate, lithium/sodium-rich layered and rock-salt phase layered materials), olivine-type phosphate active materials, positive electrode active materials with a spinel structure (such as spinel lithium manganese oxide, spinel lithium nickel manganese oxide, lithium-rich spinel lithium manganese oxide and lithium nickel manganese oxide).

Exemplarily, the general formula of the layered positive electrode active material is: LiₓA_{y}NiₐCo_{b}Mn_{c}M_{(1-a-b-c)}Y_{z}, wherein, 0≤x≤2.1, 0≤y≤2.1, and 0.9 ≤x+y≤2.1; 0≤a≤1, 0≤b≤1, 0≤c≤1, and 0.1≤a+b+c≤1; 1.8≤z≤3.5; A is selected from one or more of Na, K, Mg; M is selected from one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce; Y is selected from one or more of O and F. Optionally, y=0. Specifically, the layered positive electrode active material may comprise one or more of lithium cobalt oxide LCO, lithium nickel oxide LNO, lithium manganese oxide LMO, LiNi_{1/3}Co_{1/3}Mn_{1/3}O₂ (NCM333), LiNi_{0.8}Co_{0.1}Mn_{0.1}O₂ (NCM811) and LiNi_{0.5}Co_{0.2}Mn_{0.3}O₂ (NCM523).

Exemplarily, the general formula of the olivine-type phosphate active material is: LiₓA_{y}MeₐM_{b}P_{1-c}X_{c}Y_{z}, wherein, 0≤x≤1.3, 0≤y≤1.3, and 0.9≤ x+y≤1.3; 0.9≤a≤1.5, 0≤b≤0.5, and 0.9≤a+b≤1.5; 0≤c≤0.5; 3≤z≤5; A is selected from one or more of Na, K and Mg; Me is selected from one or more of Mn, Fe, Co and Ni; M is selected from one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La and Ce; X is selected from one or more of S, Si, Cl, B, C and N; Y is selected from one or more of O and F. Specifically, the olivine-type phosphate active material comprises one or more of LiFePO₄, LiMnPO₄, LiNiPO₄, and LiCoPO₄.

Exemplarily, the general formula of the positive electrode active material with a spinel structure is: LiₓA_{y}MnₐM₂₋ₐY_{z}, wherein, 0≤x≤2, 0≤y≤1, and 0.9≤x+y≤2; 0.5≤a≤2, 3≤c≤5; A is selected from one or more of Na, K, Mg; M is selected from one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y is selected from one or more of O and F. Specifically, the positive electrode active material with a spinel structure comprises one or more of LiMn₂O₄, LiNi_{0.5}Mn_{1.5}O₄, LiCr_{0.3}Mn_{1.7}O₄, Li_{1.1}Al_{0.1}Mn_{1.9}O₄, Li₂Mn₂O₄ and Li_{1.5}Mn₂O₄.

In some embodiments, the positive electrode film layer further optionally comprises a positive electrode conductive agent. There are no special restrictions on the type of the positive electrode conductive agent in the present application, and as an example, the positive electrode conductive agent comprises a combination of one or more selected from superconducting carbon, conductive graphite, acetylene black, carbon black, Ketjen black, carbon dots, carbon nanotubes, graphene and carbon nanofibers. In some embodiments, based on the total mass of the positive electrode film layer, the percentage mass content of the positive electrode conductive agent is 5% or less.

In some embodiments, the positive electrode film layer further optionally comprises a positive electrode binder. There are no special restrictions on the type of the positive electrode binder in the present application, and as an example, the positive electrode binder may comprise a combination of one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resins. In some embodiments, based on the total mass of the positive electrode film layer, the percentage mass content of the positive electrode binder is 5% or less.

In some embodiments, the positive electrode current collector can be a metal foil or a composite current collector. As an example of a metal foil, an aluminum foil or aluminum alloy foil can be used. The composite current collector may comprise a high molecular material substrate layer and a metal material layer formed on at least one surface of the high molecular material substrate layer. As an example, the metal material may comprise a combination of one or more selected from aluminum, aluminum alloy, nickel, nickel alloy, titanium, titanium alloy, silver and silver alloy, and the high molecular material substrate layer may comprise a combination of one or more selected from polypropylene (PP), polyethylene terephthalate (PET), polybutylene terephthalate (PBT), polystyrene (PS), and polyethylene (PE).

The positive electrode film layer is usually formed by coating a positive electrode slurry on the positive electrode current collector, followed by drying and cold pressing. The positive electrode slurry is generally formed by dispersing the positive electrode active material, the optional conductive agent, the optional binder and any other components in a solvent and sufficiently stirring the mixture. The solvent may be N-methyl pyrrolidone (NMP), but is not limited thereto.

### [Electrolyte]

The electrolyte serves to conduct ions between the positive electrode plate 522 and the negative electrode plate 521. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, an electrolyte solution is used as the electrolyte. The electrolyte solution comprises an electrolyte salt and a solvent.

As an example, the lithium salt may comprise a combination of one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP) and lithium tetrafluoro(oxalato)phosphate (LiTFOP).

As an example, the organic solvent may comprise a combination of one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the electrolyte solution further optionally comprises an additive. For example, the additive may comprise a negative electrode film-forming additive, a positive electrode film-forming additive, and may also comprise additives that can improve certain battery properties, such as additives that improve battery overcharge performance, additives that improve battery high or low temperature performance, and the like.

### [Separator]

In some embodiments, the secondary battery 5 further comprises a separator 523. The type of the separator 523 is not particularly limited in the present application, and any well-known separator 523 with a porous structure having good chemical stability and mechanical stability may be selected.

In some embodiments, the material of the separator 523 can be selected from at least one of glass fiber, non-woven cloth, polyethylene, polypropylene, and polyvinylidene fluoride. The separator 523 may be a single-layer film or a multi-layer composite film, which is not particularly limited. When the separator 523 is a multi-layer composite film, the material of each layer may be the same or different, which is not particularly limited.

In some embodiments, the positive electrode plate 522, the negative electrode plate 521, and the separator 523 can be made into an electrode assembly 52 by a winding process or a stacking process.

The present application has no particular limitation on the shape of the secondary battery, which can be cylindrical, square or any other shape. Fig. 4 is an example of a secondary battery 5 having a square structure.

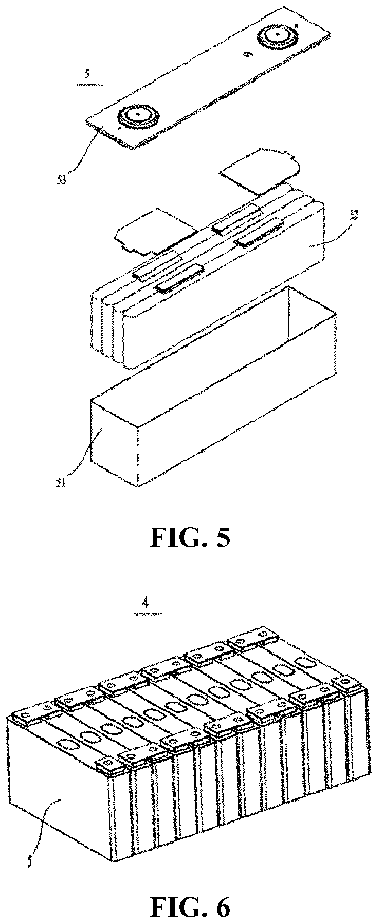

**In** some examples, referring to Figs. 4 and 5, the outer package can comprise a case 51 and a cover plate 53. Here, the case 51 can comprise a bottom plate and a side plate connected to the bottom plate, with the bottom plate and the side plate enclosing to form an accommodating cavity. The case 51 has an opening in communication with the accommodating cavity, and the cover plate 53 is used to cover the opening to close the accommodating cavity. The positive electrode plate, the negative electrode plate, and the separator may be formed into an electrode assembly 52 by a winding process or a stacking process. The electrode assembly 52 is encapsulated in the accommodating cavity. The electrolyte solution impregnates the electrode assembly 52. The number of electrode assemblies 52 contained in the secondary battery 5 can be one or more, and can be adjusted according to requirements.

The preparation method of the secondary battery according to the present application are well known. In some embodiments, the positive electrode plate, the separator, the negative electrode plate and the electrolyte solution can be assembled to form a secondary battery. As an example, the positive electrode plate, the separator and the negative electrode plate can be formed into an electrode assembly by a winding process or a stacking process, the electrode assembly can be placed in an outer package, oven dried and injected with the electrolyte solution, and then subjected to vacuum packaging, standing, formation, shaping and other procedures to obtain a secondary battery.

In some embodiments of the present application, the secondary battery according to the present application can be assembled into a battery module, the number of secondary batteries comprised in the battery module can be multiple, and the specific number can be adjusted according to the application and capacity of the battery module.

Fig. 6 is a schematic diagram of a battery module 4 as an example. As shown in Fig. 6, in the battery module 4, a plurality of secondary batteries 5 can be sequentially arranged along the length direction of the battery module 4. Of course, they can be arranged in any other way. The plurality of secondary batteries 5 may further be fixed by fasteners.

Optionally, the battery module 4 can further comprise a case having an accommodating space, in which the plurality of secondary batteries 5 are accommodated.

In some embodiments, the aforementioned battery modules can further be assembled into a battery pack, and the number of battery modules comprised in the battery pack can be adjusted according to the application and capacity of the battery pack.

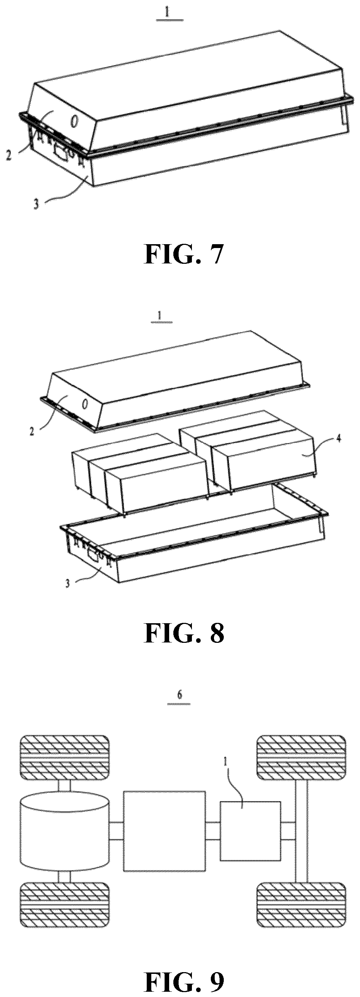

Figs. 7 and 8 are schematic diagrams of a battery pack 1 as an example. As shown in Figs. 7 and 8, the battery pack 1 can comprise a battery box and a plurality of battery modules 4 arranged in the battery box. The battery box comprises an upper box 2 and a lower box 3, wherein the upper box 2 is used to cover the lower box 3 to form an enclosed space for accommodating the battery modules 4. The plurality of battery modules 4 may be arranged in the battery box in any manner.

### Electrical apparatus

In a third aspect, the present application provides an electrical apparatus comprising at least one of the secondary battery, battery module, and battery pack of the present application. The secondary battery, battery module and battery pack may be used as a power source for the electrical apparatus, and may also be used as an energy storage unit for the electrical apparatus. The electrical apparatus may be, but is not limited to, a mobile device (such as a mobile phone and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

For the electrical apparatus, the secondary battery, the battery module, or the battery pack can be selected according to the use requirements of the electrical apparatus.

Fig. 9 is a schematic diagram of an electrical apparatus as an example. The electrical apparatus 6 is an all-electric vehicle, a hybrid electric vehicle, or a plug-in hybrid electric vehicle, etc. In order to meet the requirements of the electrical apparatus for high power and high energy density, a battery pack 1 or a battery module may be used.

As another example, the electrical apparatus may be a mobile phone, a tablet, a laptop, etc. The electrical apparatus is generally required to be light and thin, and can use a secondary battery as a power source.

### Examples

Embodiments of the present application will be described hereinafter. The embodiments described below are exemplary and only used to explain the present application, and are not to be construed as limiting the present application. Where specific techniques or conditions are not specified in the embodiments, the techniques or conditions described in the literature of the art or the product specifications are followed. All of the used agents or instruments which are not specified with the manufacturer are conventional commercially-available products.

### Example 1

### 1. Preparation of positive electrode plate

An aluminum foil with a thickness of 12 µm was used as the positive electrode current collector.

The positive electrode active material, the conductive agent carbon black, and the binder polyvinylidene fluoride (PVDF) in a weight ratio of 97.5:1.4:1.1 were fully stirred and mixed in a proper amount of solvent NMP to form a uniform positive electrode slurry; the positive electrode slurry was uniformly coated on the surface of the positive electrode current collector aluminum foil, and then dried and cold pressed to obtain the positive electrode plate.

### 2. Preparation of negative electrode plate

A copper foil with a thickness of 8 µm was used as the negative electrode current collector.

The negative electrode active material graphite, lithium polyacrylate PAALi and polyaniline PANI in a weight ratio of 96.2:2 were fully stirred and mixed in a proper amount of solvent deionized water to form a uniform negative electrode slurry; and the negative electrode slurry was uniformly coated on the surface of the negative composite current collector copper foil, and then dried and cold pressed to obtain the negative electrode plate.

### 3. Separator

A porous polyethylene (PE) film was used as the separator.

### 4. Preparation of electrolyte solution

In an environment with a water content of less than 10ppm, non-aqueous organic solvents ethylene carbonate EC and diethyl carbonate DMC were mixed in a volume ratio of 1:1 to obtain an electrolyte solution solvent, and then a lithium salt was mixed with the mixed solvent to obtain an electrolyte solution with a lithium salt concentration of 1 mol/L.

### 5. Preparation of secondary battery

The abovementioned positive electrode plate, separator and negative electrode plate were stacked in order, so that the separator was positioned between the positive electrode plate and the negative electrode plate to separate them, and then they were wound to obtain an electrode assembly; the electrode assembly was put into an outer package and dried, and then the electrolyte solution was injected thereto; thereafter, a lithium-ion secondary battery was obtained through processes such as vacuum encapsulation, standing, formation and shaping.

### Example 2

In Example 2-1 to Example 2-5, lithium-ion batteries were prepared according to a method similar to that in Example 1. The difference from Example 1 is that the mass content of at least one of lithium polyacrylate PAALi and polyaniline PANI was adjusted in Example 2.

### Comparative Example 1

In Comparative Example 1, lithium-ion batteries were prepared according to a method similar to that in Example 1. The difference from Example 1 is that no polyaniline PANI was added in Comparative Example 1.

### Comparative Example 2

In Comparative Example 2, lithium-ion batteries were prepared according to a method similar to that in Example 1. The difference from Example 1 is that no lithium polyacrylate PAALi was added in Comparative Example 2.

### Comparative Example 3

In Comparative Example 3, lithium-ion batteries were prepared according to a method similar to that in Example 1. The difference from Example 1 is that no lithium polyacrylate PAALi and polyaniline PANI was added in Comparative Example 2.

The relevant parameters of Examples 1 and 2 and Comparative Examples 1 to 3 are shown in Table 1:

**Table 1**

| No. | Graphite : CMC : SP : SBR : PAALi : PANI powder blending ratio | A/B | 25°C, 10%-80%SOC equivalent charging window | 80%SOH cycling performance/ Cycles |
|---|---|---|---|---|
| Example 1 | 96:0:0:0:2.00:2.00 | 1.00 | 2.20C | 4000 |
| Example 2-1 | 96:0:0:0:0.80:3.20 | 0.25 | 1.75C | 2500 |
| Example 2-2 | 96:0:0:0:1.50:2.50 | 0.60 | 2.00C | 3700 |
| Example 2-3 | 96:0:0:0:2.40:1.60 | 1.50 | 1.80C | 2800 |
| Example 2-4 | 96:0:0:0:2.75:1.25 | 2.20 | 1.90C | 3300 |
| Example 2-5 | 96:0:0:0:3.00:1.00 | 3.00 | 1.95C | 3500 |
| Comparative Example 1 | 96:1:1:0:2.00:0.00 | / | 1.78C | 2700 |
| Comparative Example 2 | 96:1:0:1:0.00:2.00 | / | 1.70C | 2300 |
| Comparative Example 3 | 96:1:2:2:0.00:0.00 | / | 1.60C | 2000 |

In Table 1, SP refers to conductive carbon black Super-P.

It can be seen from Table 1 that compared with Comparative Example 3, the addition of lithium polyacrylate PAALi in Comparative Example 1 can improve the bonding performance between the negative electrode active material and the negative electrode current collector, and can improve the cycling performance of the lithium-ion battery. In Comparative Example 2, the addition of polyaniline PANI can improve the conductivity of the negative electrode plate. Compared with Comparative Example 1 and Comparative Example 2, in Example 1 and Example 2, a blend of lithium polyacrylate PAALi and polyaniline PANI is added, which can well improve the dynamic performance of the lithium-ion battery and improve its charge-discharge rate performance and cycling performance.

### Example 3

In Example 3-1 to Examples 3-2, lithium-ion batteries were prepared according to a method similar to that in Example 1. Unlike Example 1, Example 3 changed the type of the π conjugated polymer.

### Example 4

In Example 4, lithium-ion batteries were prepared according to a method similar to that in Example 1. The difference from Example 1 is that Example 4 changed the type of the polymer containing ester groups.

### Example 5

In Example 5, lithium-ion batteries were prepared according to a method similar to that in Example 1. The difference from Example 1 is that Example 5 changed the type of the negative electrode active material.

For each of the negative electrode active materials in Example 3 to Example 5: the powder blending ratio of CMC : SP : SBR : polymer containing ester groups : π-conjugated polymer was 96:0:0:0:2.00:2.00.

The relevant parameters of Example 3 to Example 5 are as shown in Table 2:

**Table 2**

| No. | Negative electrode active material | Polymer containing ester groups | π-conjugated polymer | 25°C,10%-80%SOC Equivalent charging window | 80%SOH cycling performance/Cycles |
|---|---|---|---|---|---|
| Example 1 | Graphite | Lithium polyacrylate PAALi | Polyaniline PANI | 2.20C | 4000 |
| Example 3-1 | Graphite | Lithium polyacrylate PAALi | Polythiophene | 2.10C | 3800 |
| Example 3-2 | Graphite | Lithium polyacrylate PAALi | Polyacetylene | 2.00C | 3700 |
| Example 4 | Graphite | Lithium polymethacrylate | Polyaniline PANI | 2.00C | 3700 |
| Example 5 | Silicon-based | Lithium polyacrylate PAALi | Polyaniline PANI | 1.95C | 3500 |

It can be seen from Table 2 that the performance of lithium-ion batteries can be regulated and controlled by regulating and controlling the types of negative electrode active materials and additives in the negative electrode plate.

### Example 6

In Example 6-1 to Example 6-9, lithium ion batteries were prepared in a method similar to that in Example 1. Unlike Example 1, Example 6 added at least one of a negative electrode binder, a negative electrode conductive agent, and a negative electrode dispersant, and adjusted the contents of the negative electrode binder, the negative electrode conductive agent, and the negative electrode dispersant.

The relevant parameters of Example 6 are as shown in Table 3.

**Table 3**

| No. | Graphite : CMC : SP : SBR : PAALi : PANI powder blending ratio | A/B | 25°C, 10%-80%SOC equivalent charging window | 80%SOH cycling performance/ Cycles |
|---|---|---|---|---|
| Example 1 | 96:0.0:0.00:0.00:2.0:2.0 | 1.00 | 2.20C | 4000 |
| Example 6-1 | 96:1.0:0.50:1.50:0.5:0.5 | 1.00 | 1.90C | 3400 |
| Example 6-2 | 96:1.0:0.00:0.00:1.5:1.5 | 1.00 | 2.00C | 3700 |
| Example 6-3 | 96:0.0:0.50:0.00:1.5:2.0 | 0.75 | 2.10C | 3800 |
| Example 6-4 | 96:0.0:0.00:1.50:1.5:1.0 | 1.50 | 1.90C | 3400 |
| Example 6-5 | 96:1.0:0.50:0.00:1.5:1.0 | 1.50 | 1.95C | 3500 |
| Example 6-7 | 96:1.0:0.00:1.50:1.0:0.5 | 2.00 | 1.80C | 2800 |
| Example 6-8 | 96:0.0:0.50:1.50:1.0:1.0 | 1.00 | 1.85C | 3200 |
| Example 6-9 | 96:0.5:0.25:0.75:1.5:1.0 | 1.50 | 2.05C | 3750 |

It can be seen from Table 3 that compared with Example 1, other auxiliary agents, such as conductive agents, binders and dispersants were added in Examples 6-1 to 6-9, although such auxiliary agents can also improve the performance of the negative electrode film layer together with the polymer blend.

### Tests

### 1. The 25°C,10%-80%SOC equivalent charging window test of secondary battery

At 25°C, the secondary batteries prepared above were charged at a constant current of 0.33C to a charging cut-off voltage of 4.4 V, then charged at a constant voltage to a current of ≤ 0.05C and allowed to stand for 5 min, and then discharged at a constant current of 0.33C to a discharging cut-off voltage of 2.8 V, and its actual capacity was recorded as C0.

Then, the secondary battery was charged at a constant current of 0.5C0, 1C0, 1.5C0, 2C0, 2.5C0, 3C0, 3.5C0, 4C0, and 4.5C0 sequentially to a full battery charging cut-off voltage of 4.4V or a negative electrode cut-off potential of 0V (whichever came first). After each charging, the battery needed to be discharged at 1C0 to a full battery discharge cut-off voltage of 2.8V, and the corresponding negative electrode potential when the battery was charged to 10%, 20%, 30%...80% SOC (State of Charge) at different charging rates was recorded, the rate-negative electrode potential curve under different SOC was plotted, and after linear fitting, the corresponding charging rate when the negative electrode potential was 0V under different SOC was obtained. This charging rate is the charging window under that SOC, which is recorded as C10%SOC, C20%SOC, C30%SOC, C40%SOC, C50%SOC, C60%SOC, C70%SOC, C80%SOC, respectively. The 10%-80%SOC equivalent charging window is the average value of the charging windows of 10%-80%SOC.

The larger the value of the equivalent charging window, the higher the rate under which the charge-discharge can be performed under certain specified temperature and SOC conditions, and the more difficult for the anode to reach the 0V lithium plating potential, thereby improving the rate performance and cycling stability of the battery.

### 2. Test for secondary battery cycling performance

At 25°C, the lithium-ion batteries prepared in Examples and Comparative Examples were charged at a rate of 3C, discharged at a rate of 1C, and subjected to a 3%-97% SOC cycling test until the capacity of the lithium-ion battery was less than 80% of the initial capacity, and the number of cycles was recorded.

Although the present application has been described with reference to the preferred embodiments, various improvements can be made thereto and components thereof can be replaced with equivalents without departing from the scope of the present application. **In** particular, the technical features mentioned in the various examples can be combined in any manner as long as there is no structural conflict. The present application is not limited to the specific embodiments disclosed herein, but rather comprises all technical solutions falling within the scope of the claims.

## Claims

1. A negative electrode plate, comprising a negative electrode current collector and a negative electrode film layer arranged on at least one side of the negative electrode current collector, the negative electrode film layer comprising a negative electrode active material and a polymer blend, and the polymer blend comprising a π-conjugated polymer and a polymer containing ester groups.

2. The negative electrode plate according to claim 1, wherein,
the π-conjugated polymer comprises one or more of substituted or unsubstituted polyaniline, substituted or unsubstituted polythiophene, substituted or unsubstituted polypyrrole, substituted or unsubstituted polyacetylene, substituted or unsubstituted poly(p)phenylene (ethylene), substituted or unsubstituted poly(p)phenylene acetylene, substituted or unsubstituted polyfluorene, substituted or unsubstituted polyselenophene, substituted or unsubstituted polycarbazole and substituted or unsubstituted polydiyne; and/or
the polymer containing ester groups comprises one or more of substituted or unsubstituted poly(meth)acrylic acid and salts thereof, substituted or unsubstituted polymaleic acid and salts thereof, substituted or unsubstituted polyfumaric acid and salts thereof, substituted or unsubstituted sodium alginate and substituted or unsubstituted carboxymethyl cellulose salts;
optionally, the poly(meth)acrylic acid and salts thereof comprise one or more of poly(meth)acrylic acid, lithium poly(meth)acrylate, sodium poly(meth)acrylate, and potassium poly(meth)acrylate;
the polymaleic acid and salts thereof comprise one or more of polymaleic acid, lithium polymaleate, sodium polymaleate, and potassium polymaleate;
the polyfumaric acid and salts thereof comprise one or more of polyfumaric acid, lithium polyfumarate, sodium polyfumarate and potassium polyfumarate; and
the carboxymethyl cellulose salt comprises one or more of lithium carboxymethyl cellulose, sodium carboxymethyl cellulose, and potassium carboxymethyl cellulose.

3. The negative electrode plate according to claim 1 or 2, wherein,
the mass content of the polymer containing ester groups relative to the negative electrode film layer is recorded as A%;
the mass content of the π-conjugated polymer relative to the negative electrode film layer is recorded as B%; and
the negative electrode plate satisfies: 0.1≤A/B≤6; optionally, 0.3≤A/B≤3.

4. The negative electrode plate according to any one of claims 1 to 3, wherein,
the mass content of the polymer containing ester groups relative to the negative electrode film layer is recorded as A%, 0.5≤A≤3;
and/or
the mass content of the π-conjugated polymer relative to the negative electrode film layer is recorded as B%, 0.5≤B≤3.

5. The negative electrode plate according to any one of claims 1 to 4, wherein the negative electrode film layer further comprises a negative electrode binder, and the mass content of the negative electrode binder relative to the total mass of the negative electrode film layer is recorded as D%, 0≤D≤2; optionally, 0≤D≤1.5;
optionally, the negative electrode binder comprises one or more of styrene butadiene rubber, polyacrylic acid, sodium polyacrylate, polyacrylamide, polyvinyl alcohol, sodium alginate, polymethacrylic acid, and carboxymethyl chitosan;
further optionally, the negative electrode binder comprises styrene butadiene rubber and/or polyacrylamide.

6. The negative electrode plate according to any one of claims 1 to 5, wherein the negative electrode film layer further comprises a negative electrode conductive agent, and the mass content of the negative electrode conductive agent relative to the total mass of the negative electrode film layer is recorded as F%, 0≤F≤1; optionally, 0≤F≤0.5;
optionally, the negative electrode conductive agent comprises one or more of superconducting carbon, acetylene black, carbon black, Ketjen black, carbon dot, carbon nanotube, graphene, and carbon nanofiber;
further optionally, the negative electrode conductive agent comprises superconducting carbon and/or carbon nanotubes.

7. The negative electrode plate according to any one of claims 1 to 6, wherein the negative electrode film layer further comprises a negative electrode dispersant, and the mass content of the negative electrode dispersant relative to the total mass of the negative electrode film layer is recorded as E%, 0≤E≤1.5; optionally, 0≤E≤1;
optionally, the negative electrode dispersant comprises one or more of sodium carboxymethyl cellulose, sodium methylene dimethyl dinaphthalene sulfonate, sodium dodecylbenzenesulfonate, polyethyleneimine and N-methylpyrrolidone.

8. The negative electrode plate according to any one of claims 1 to 7, wherein the percentage mass content of the negative electrode active material relative to the total mass of the negative electrode film layer is recorded as C%, 90≤C≤95; Optionally, 96≤C≤99;
optionally, the negative electrode active material comprises one or more of artificial graphite, natural graphite, soft carbon, hard carbon, silicon-based material, tin-based material, and lithium titanate.

9. A secondary battery, comprising the negative electrode plate according to any one of claims 1 to 8.

10. An electrical apparatus, comprising the secondary battery according to claim 9.
